# FASCICULE DE BREVET EUROPEEN

(11) **EP 4 016 423 B1**
(45) Date de publication et mention de la délivrance du brevet: **11.06.2025**
(21) Numéro de dépôt: 21214978.5
(22) Date de dépôt: 16.12.2021
(51) Int. Cl.: A47B 46/00, A47F 5/00, G06Q 10/087, G06Q 20/30, G06Q 20/20

(54) **PRÉSENTOIR À ORGANE D'IDENTIFICATION ADAPTÉ POUR PRÉSENTER UN OU PLUSIEURS PRODUITS**
VERKAUFSSTÄNDER MIT IDENTIFIKATIONSORGAN ZUR PRÄSENTATION EINES ODER MEHRERER PRODUKTE
DISPLAY UNIT WITH IDENTIFICATION MEMBER ADAPTED FOR DISPLAYING ONE OR MORE PRODUCTS

(30) Priorité: 16.12.2020 FR 2013356
(43) Date de publication de la demande: 22.06.2022
(73) Titulaire: Conex Digital LLC, Melville, NY 11747 (US)
(72) Inventeur: DUPERE, Louis, NEW YORK, 10543 (US); LORIN, Nicolas, NEW YORK, 11790 (US); VIEVILLE, Jean, NEW YORK, 11102 (US); NADEEM, Waqas, NEW YORK, 11754 (US); KHANDAGALE, Nikit, NEW YORK, 11801 (US)
(74) Mandataire: Lavoix

(56) Documents cités:
- WO-A1-97/05556
- FR-A1- 2 975 811
- FR-A1- 3 005 521
- US-A1- 2020 126 150

## Description

La présente invention concerne un présentoir adapté pour présenter un ou plusieurs produits, notamment cosmétiques, et réaliser une publicité du ou des produits sur un lieu de vente, le présentoir comprenant au moins un module destiné à la présentation d'au moins un ensemble de produits, le présentoir comprenant un châssis.

L'invention concerne également un procédé de présentation d'un ou plusieurs produits pour réaliser une publicité du ou des produits sur un lieu de vente, mettant en œuvre un tel présentoir.

Un produit cosmétique est avantageusement un produit tel que défini dans le Règlement CE numéro 1023/2009 du Parlement européen et du Conseil, daté du 30 novembre 2009, relatif aux produits cosmétiques.

De tels présentoirs sont en général en nombre varié sur les lieux de vente et prennent des formes variées adaptées aux produits : présentoir de comptoir, systèmes à tiroirs, systèmes muraux, gondole, etc... Chaque présentoir sert à présenter un ou plusieurs ensembles de produits, correspondant en général à des familles de produits. Les ensembles de produit cosmétiques sont présentées dans des modules du présentoir qui leur sont dédiés pendant un certain temps.

Afin de gérer la présentation des produits, on utilise un plan de répartition, ou « planogramme », du présentoir, c'est-à-dire une présentation, en générale visuelle, de l'implantation des produits dans le présentoir. Ce « planogramme » fournit la liste des produits et leurs emplacements. Il s'accompagne par exemple de bandes en papier à appliquer sur le présentoir afin d'indiquer des caractéristiques des produits, notamment les prix. Les « planogrammes » sont en général gérés en amont par les fournisseurs de produits (les marques attachées aux produits) et changent typiquement jusqu'à quatre à six fois par an, en fonction de la saison, de la mode, etc...

De tels présentoirs, organisés par des « planogrammes », donnent globalement satisfaction, mais leur gestion reste complexe et repose sur la disponibilité et la bonne volonté des personnels qui les installent. Le nombre de changements par an est de fait limité à quatre à six. En outre, il existe des risques d'erreur dans la présentation des produits : des produits obsolètes peuvent être laissés en place, ou bien des prix erronés peuvent être affichés, avec les conséquences légales attachées à ce type d'erreur. Les marques doivent donc supposer que les « planogrammes » sont bien respectés, mais n'ont aucune assurance que ce soit effectivement le cas.

Par ailleurs, dans le domaine des présentoirs sur lieu de vente, le recours à des moyens digitaux est jugé « ingérable » par wifi ou USB.

Le besoin de modification de l'affichage digital se faisant par un protocole USB implique un long procédé de mise en place (préparation d'une clef USB, envoi par voie postale, installation en magasin, redémarrage du présentoir) et ne permet pas à la marque de vérifier la mise à disposition d'un nouveau contenu que le ou les vendeurs n'auront peutêtre pas mise en place.

La mise en place de changements de contenu via wifi implique que la marque devra obtenir de chacun de ses réseaux de distributions (magasins de grande distribution, magasins spécialisé, magasin environnement aéroport, etc...) l'accès à leur infrastructure wifi en magasin. Cela impliquerait une négociation de la marque avec chaque réseau de distribution afin de mettre en place un réseau dans plusieurs milliers de magasins, ce qui n'est pas une solution qui serait évolutive.

Des caméras sont parfois utilisées pour reconnaître la disposition des produits sur des étagères. Toutefois, cette solution reste imparfaite et le lieu de vente ne permet pas toujours un recul suffisant pour que la ou les caméras puissent visualiser tout le ou tous les présentoirs.

De même, des afficheurs LCD, notamment en dimension 3 pouces, sont parfois utilisés dans les présentoirs.

D'une manière générale, les moyens précités ne résolvent pas les problèmes de complexité et de respect des « planogrammes » et présentent le désavantage de nécessiter une main d'œuvre importante en amont de l'arrivée en magasin, mais aussi lors d'installation de mises à jour en magasin.

Le document FR 3 005 521 A1 décrit un présentoir connu de l'art antérieur.

Un but de l'invention est donc de fournir un présentoir facilitant la mise en œuvre des « planogrammes » et l'automatisation de ce dernier de manière programmatique. Actuellement la mise en place et le changement de graphique (visuel, étiquettes de prix ou de produits) est un procédé manuel qui implique l'impression d'un graphique, l'envoi par courrier postal et la mise en place par un installateur ou un vendeur en magasin. Ce procédé peut prendre plusieurs semaines, voire plusieurs mois, et suppose une logistique complexe à grande échelle. Aussi, ce procédé ne garantit pas la mise en place du changement de graphique à distance, car un des maillons de la chaîne d'installation peut être défaillant (mauvais installateur, pas de graphique, erreur d'impressions, etc...). De plus, l'installation d'un changement de graphique à distance ne garantit pas non plus que celui-ci ait été fait selon les choix stratégiques de la marque (non-respect de la position d'un produit sur un présentoir, mauvaise installation d'un visuel etc...).

A cet effet, l'invention a pour objet un présentoir de vente adapté pour présenter un ou plusieurs produits, notamment cosmétiques, et réaliser une publicité du ou des produits sur un lieu de vente, le présentoir comprenant au moins un module destiné à la présentation d'au moins un ensemble de produits, le présentoir comprenant un châssis, au moins une unité de traitement comportant un processeur et une mémoire, le module comprenant :
- optionnellement une réserve comportant un stock dudit ensemble de produits,
- un réceptacle monté sur le châssis et comportant un organe de détection, et
- un support de produits comprenant un organe d'identification représentatif du support de produits, le support de produits étant mobile entre une position non installée, dans laquelle le support de produits est à l'écart du réceptacle, et une position installée, dans laquelle le support de produits est reçu dans le réceptacle,

l'organe de détection étant adapté pour coopérer avec l'organe d'identification, lorsque le support de produits est dans la position installée, pour identifier le support de produits, et pour envoyer à l'unité de traitement une information représentative du fait que le support de produits identifié est dans la position installée,
la mémoire comportant des informations qui, lorsqu'elles sont exécutées par le processeur, conduisent l'unité de traitement à envoyer des informations contenues dans la mémoire à un serveur via un réseau, et/ou à un écran du présentoir, les informations envoyées étant relatives au moins à l'ensemble de produits associé au support de produits identifié.

Selon des modes de réalisation particuliers, le présentoir comprend l'une ou plusieurs des caractéristiques suivantes, prise(s) isolément ou selon toutes les combinaisons techniquement possibles :
- le support de produits comprend au moins un produit test associé à l'ensemble de produits ;
- le support de produits comprend au moins un produit de présentation associé à l'ensemble de produits ;
- l'organe d'identification comprend : une radio-étiquette, un code QR, ou un circuit électrique analogique ;
- la mémoire comporte en outre des informations qui, lorsqu'elles sont exécutées par le processeur, conduisent l'unité de traitement à :
   - lire au moins une information contenue dans la mémoire, et envoyer l'information lue au serveur, l'information lue étant relative à l'ensemble de produits associé au support de produits identifié, ou représentative du fait que le support de produits identifié est dans la position installée, et/ou
   - envoyer au serveur une demande d'informations concernant l'ensemble de produits associé au support de produits identifié, et/ou d'informations de configuration de l'unité de traitement, recevoir lesdites informations et les inscrire dans la mémoire ;
- le présentoir comprend en outre au moins un capteur adapté pour réaliser une détection faciale d'un utilisateur du présentoir, et/ou un capteur de suivi dudit stock par reconnaissance visuelle des produits dudit stock ;
- le réceptacle comprend une partie fixe solidaire du châssis, un tiroir monté mobile sur la partie fixe, et un capteur adapté pour détecter une ouverture ou une fermeture du tiroir et envoyer une information représentative de l'ouverture ou de la fermeture à l'unité de traitement ;
- la mémoire comporte des informations qui, lorsqu'elles sont exécutées par le processeur, conduisent l'unité de traitement à :
   - lire de nouvelles informations vidéo contenues dans la mémoire, et envoyer les nouvelles informations à l'écran, les nouvelles informations étant relatives à l'ensemble de produits associé au support de produits identifié, ou
   - envoyer au serveur une information représentative de l'ouverture ou de la fermeture ;
- le présentoir comprend un système de géolocalisation adapté pour géolocaliser le présentoir et fournir à l'unité de traitement une information de géolocalisation, ou une interface permettant à un utilisateur du présentoir de fournir à l'unité de traitement une information de géolocalisation ;
- le présentoir comprend un bouton connecté à l'unité de traitement, l'unité de traitement étant configurée pour afficher sur l'écran une information représentative du présentoir lorsque le bouton est actionné par un utilisateur du présentoir ;
- le présentoir comprend une pluralité de modules destinés à la présentation d'une pluralité d'ensemble de produits, chacun des modules comprenant :
   - optionnellement une réserve comportant un stock dudit ensemble de produits,
   - soit une unité de traitement décentralisée comportant un processeur et une mémoire, soit une puce de gestion vidéo connectée sur l'unité de traitement centralisée du présentoir,
   - un écran connecté à l'unité de traitement décentralisée ou à la puce,
   - un réceptacle monté sur le châssis et comportant un organe de détection, et
   - un support de produits comprenant au moins un produit test associé à l'un des ensembles de produits, le support de produits comprenant un organe d'identification représentatif du support de produits, le support de produits étant mobile entre une position non installée, dans laquelle le support de produit est à l'écart du présentoir, et une position installée, dans laquelle le support de produits est reçu dans le réceptacle,
      l'organe de détection étant adapté pour coopérer avec l'organe d'identification lorsque le support de produits est dans la position installée, pour identifier le support de produits, et pour envoyer à l'unité de traitement décentralisée ou à l'unité de traitement du présentoir une information représentative du fait que le support de produits identifié est dans la position installée,
      la mémoire de l'unité de traitement décentralisée ou de l'unité de traitement du présentoir comportant des informations qui, lorsqu'elles sont exécutées par le processeur de l'unité de traitement décentralisée ou de l'unité de traitement du présentoir, conduisent l'unité de traitement décentralisée ou l'unité de traitement du présentoir à envoyer à l'écran des informations vidéo contenues dans la mémoire, les informations vidéo étant relatives à l'ensemble de produits associé au support de produits identifié ;
   - le présentoir comprend un système d'intercommunication des modules adapté pour que les unités de traitement décentralisées ou l'unité de traitement du présentoir reçoivent des informations de positionnement :
      - représentatives de la position relative les uns par rapport aux autres des réceptacles ayant des supports de produits dans la position installée, et/ou
      - pour chacun des réceptacles ayant des supports de produits dans la position installée, représentatives des supports de produits qui sont dans la position installée dans ceux des réceptacles situés dans un voisinage prédéfini dudit chacun des réceptacles ;
   - la mémoire de l'unité de traitement du présentoir ou d'au moins une des unités de traitement décentralisées comporte des informations qui, lorsqu'elles sont exécutées par le processeur de l'unité de traitement du présentoir ou de l'au moins une des unités de traitement décentralisée, conduisent l'unité de traitement du présentoir ou l'au moins une des unités de traitement décentralisées à :
      - envoyer au serveur lesdites informations de positionnement, et/ou
      - envoyer à certains des écrans des informations vidéo synchronisées ; et
   - la mémoire d'au moins une des unités de traitement décentralisées associée à l'un des réceptacles, comporte des informations qui, lorsqu'elles sont exécutées par le processeur de l'au moins une des unités de traitement décentralisées, conduisent l'au moins une des unités de traitement décentralisées à :
      - envoyer des informations à une autre des unités de traitement décentralisées, ou
      - à envoyer à celui des écrans qui lui est associé des informations relatives à l'un des ensemble de produits associé à l'un des supports de produits reçu dans un autre des réceptacles.

L'invention a également pour objet un procédé de présentation d'un ou plusieurs produits, notamment cosmétiques sur un lieu de vente pour réaliser une publicité du ou des produits sur le lieu de vente, mettant en œuvre un présentoir, et comprenant les étapes suivantes :
- déplacement du support de produits entre la position non installée et la position installée,
- coopération de l'organe de détection avec l'organe d'identification pour identifier le support de produits, et pour envoyer à l'unité de traitement une information représentative du fait que le support de produits identifié est dans la position installée,
- lecture, par le processeur, d'informations contenues dans la mémoire, et
- envoi, par l'unité de traitement, d'informations contenues dans la mémoire au serveur via le réseau, et/ou à l'écran, les informations étant relatives au moins à l'ensemble de produits associé au support de produits identifié.

L'invention sera mieux comprise à la lecture de la description qui va suivre, donnée uniquement à titre d'exemple et faite en se référant aux dessins annexés, sur lesquels :
- la figure 1 est une vue schématique illustrant la gestion à distance d'une pluralité de présentoirs selon l'invention,
- la figure 2 est une vue en perspective d'un présentoir selon un premier mode de réalisation de l'invention, les supports de produits n'étant pas représentés, et d'une interface de communication avec le serveur,
- la figure 3 est une vue en perspective d'un des modules du présentoir représenté sur la figure 2,
- la figure 4 est une vue en perspective d'un des supports de produits du présentoir représenté sur la figure 2,
- la figure 5 est une vue schématique du présentoir représenté sur la figure 2,
- la figure 6 est une vue schématique d'un présentoir selon un deuxième mode de réalisation de l'invention.

### Installation et réseaux

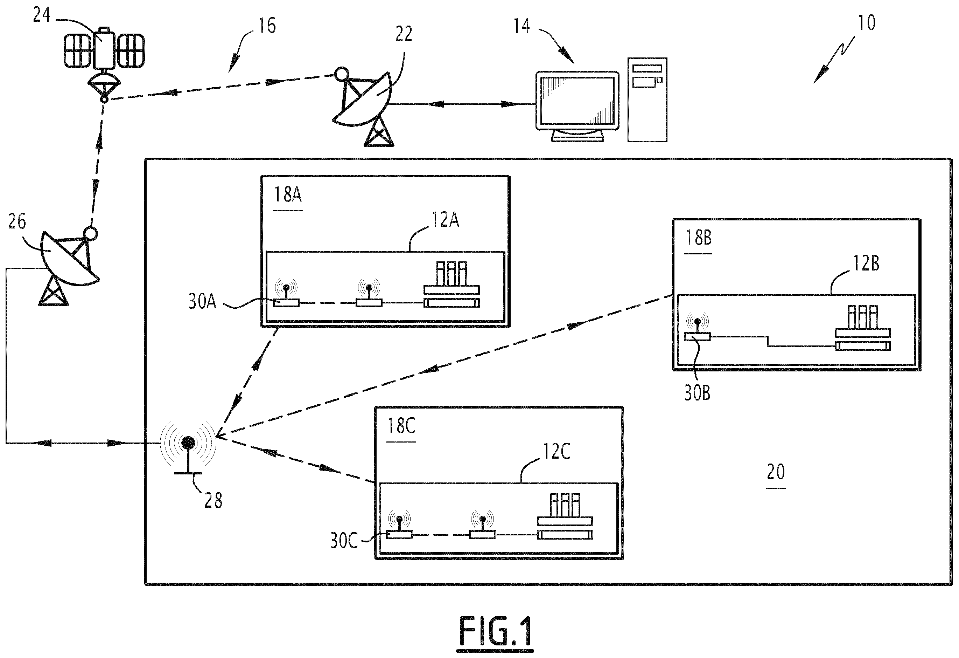

En référence à la figure 1, on décrit une installation 10 comportant une pluralité de présentoirs 12A, 12B, 12C selon l'invention. L'installation 10 comprend aussi un serveur 14, par exemple distant, relié à chacun des présentoirs 12A, 12B, 12C par un réseau 16.

Les présentoirs 12A, 12B, 12C sont respectivement situés dans des lieux de ventes 18A, 18B, 18C, par exemple des magasins de produits cosmétiques, ou des parties dédiées à la vente de produits, notamment cosmétiques, dans des espaces commerciaux plus vastes (non représentés).

Selon une variante non représentée, lieux de vente 18A, 18B, 18C comprennent plus d'un présentoir selon l'invention.

Dans l'exemple représenté, les lieux de ventes 18A, 18B, 18C sont situés dans un même pays 20.

Selon une variante non représentée, les lieux de ventes 18A, 18B, 18C se situent dans plusieurs pays différents.

Dans l'exemple, le serveur 14 se situe dans un autre pays encore.

Le réseau 16 comprend par exemple au moins une antenne de télécommunication 22 reliée au serveur 14, et au moins un satellite 24 adapté pour communiquer avec l'antenne de télécommunication 22. Le réseau 16 comprend aussi au moins une antenne de télécommunication 26 située dans le pays 20 et adaptée pour communiquer avec le satellite 24 et reliée à une antenne relais 28.

La communication via le réseau 16 est avantageusement bidirectionnelle (du serveur 14 vers les présentoirs 12A, 12B, 12C

L'antenne relais 28 est adaptée pour communiquer avec des antennes 30A, 30B, 30C des présentoirs 12A, 12B, 12C, par exemple via un protocole 3G/4G.

Il va de soi que, sur la figure 1, le réseau 16 est représenté de façon simplifiée, avec deux antennes de télécommunications 22, 26, et une antenne relais 28. En réalité, le réseau 16 peut être plus complexe, d'une manière connue en soi par l'homme du métier des télécommunications nationales et internationales, avec notamment un plus grand nombre d'antennes interchangeables.

### Présentoirs

Le présentoir 12C est par exemple identique au présentoir 12A et ne sera pas décrit.

Le présentoir 12B est quasi identique au présentoir 12A et sera brièvement décrit plus bas.

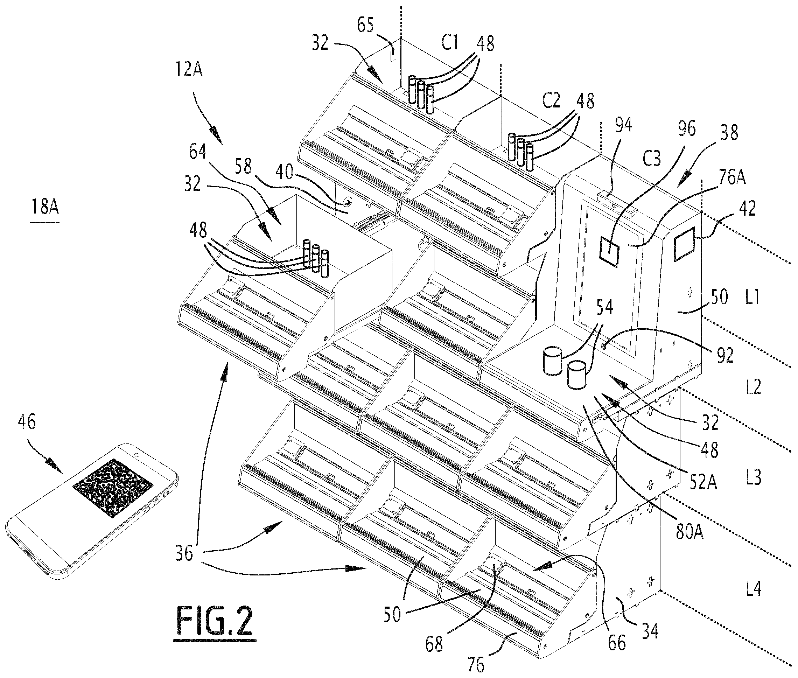

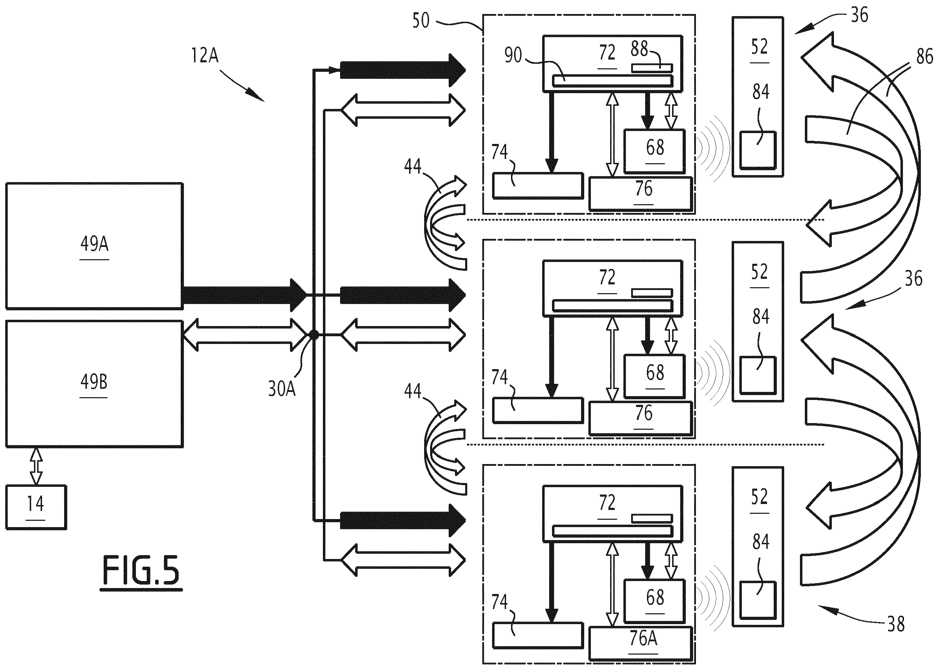

Seul le présentoir 12A sera décrit ci-après en détail, plutôt en référence aux figures 2 à 4 pour les aspects structurels, et plutôt en référence à la figure 5 pour les aspects fonctionnels.

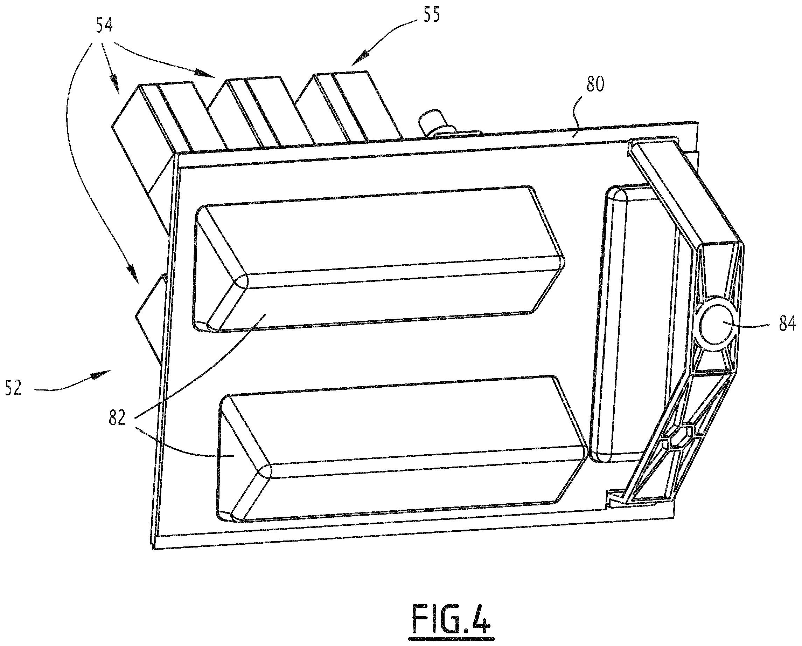

Le présentoir 12A est adapté pour présenter un ou plusieurs produits 32, notamment cosmétiques, dont une partie est visible sur la figure 4, et pour réaliser une publicité du ou des produits 32 sur le lieu de vente 18A.

Le présentoir 12A comprend un châssis 34, une pluralité de modules 36 fixés sur le châssis et avantageusement analogues entre eux, et par exemple un module 38 légèrement différent des modules 36 et également fixé sur le châssis.

Dans l'exemple représenté, le présentoir 12A est du type « système à tiroirs », le châssis 34 étant autonome et plutôt vertical, les modules 36 formant des tiroirs comme on le verra.

Selon des variantes non représentées, le présentoir 12A appartient à un autre type, par exemple un système mural dans lequel le châssis 34 est fixé sur un mur (non représenté), une gondole, un présentoir de comptoir, ou encore d'autres types de présentoirs connus en eux-mêmes.

Le présentoir 12A comprend avantageusement un bouton 40 « caché », par exemple monté sur le châssis 34 dans un endroit peu visible, et un système de géolocalisation 42 également monté sur le châssis.

Le présentoir 12A comprend par exemple un système d'intercommunication 44 adapté pour permettre aux modules 36 de communiquer entre eux et avantageusement avec le module 38, d'une manière qui sera décrite plus bas.

Le présentoir 12A comprend avantageusement une interface 46 permettant à un utilisateur (non représenté) du présentoir d'envoyer au serveur 14 des informations relatives au présentoir, par exemple une information de géolocalisation du présentoir, ou de recevoir des informations.

Selon un mode de réalisation particulier non représenté, le présentoir 12A ne comporte qu'un seul module, notamment si c'est un présentoir de comptoir.

### Modules

Chacun des modules 36, 38 est respectivement destiné à la présentation d'un ensemble de produits 48 correspondant à un sous-groupe des produits 32 présentés par le présentoir 12A.

Dans l'exemple représenté, les modules 36 sont au nombre de 10 (figure 2), dont seulement deux sont représentés sur la figure 5. Les modules 36 sont par exemple organisés selon des lignes ou rangées superposées et notées L1 à L4 sur la figure 2, et selon des colonnes C1 à C3.

Dans l'exemple, il y a quatre lignes et trois colonnes. Les lignes L3 et L4 situées en bas comportent respectivement trois modules 36. Les lignes L1 et L2 situées en haut comportent respectivement deux modules situées dans les colonnes C1 et C2.

Le module 38 occupe la colonne C3 et les lignes L1 et L2. Le module 38 occupe dans l'exemple un emplacement correspondant en volume à deux emplacements des modules 36.

Dans les présentoirs 12A et 12C, les modules 36, 38 sont reliés respectivement aux antennes 30A et 30C par un réseau sans fil, tandis que, dans le présentoir 12B, les modules 36, 38 sont reliés à l'antenne 30B par des fils.

Les modules 36 étant analogues entre eux, seul l'un d'eux sera décrit ci-après. Les différences entre le module 38 et les modules 36 seront décrites ensuite.

Chacun des modules 36 est relié à une source électrique 49A et au réseau internet 49B.

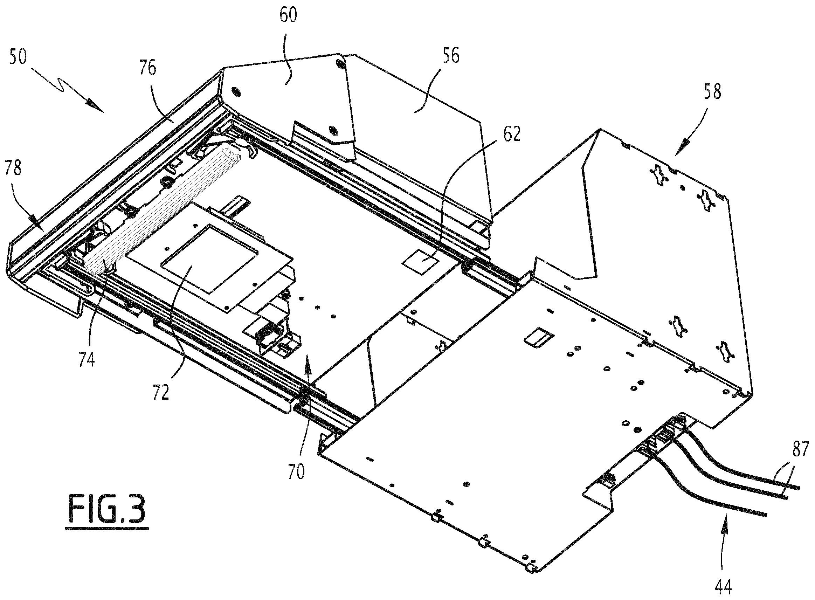

Chacun des modules 36 comprend un réceptacle 50 (figure 3) monté sur le châssis 34, un support de produits 52 (figure 4) comprenant par exemple des produits test 54 associés à l'ensemble de produits 48 du module (stock), et avantageusement une réserve 56 adaptée pour recevoir un stock dudit ensemble de produits 48.

Les produits 48 sont habituellement des produits emballés.

Les produits test 54 ne sont pas destinés à la vente. Ils sont destinés à permettre à un potentiel client (non représenté) de tester un ou plusieurs produits représentatifs de l'ensemble de produits 48.

Dans l'exemple représenté, le réceptacle 50 comprend une partie fixe 58 solidaire du châssis 34, un tiroir 60 monté mobile sur la partie fixe, et un capteur 62 adapté pour détecter une ouverture du tiroir par rapport à la partie fixe.

La réserve 56 est par exemple fixée à l'arrière du tiroir 60 par rapport au présentoir 12A. La réserve 56 forme par exemple un logement 64 de forme parallélépipédique ouvert vers le haut du présentoir 12A. La réserve 56 comprend avantageusement un capteur 65 de suivi dudit stock, par exemple un capteur infrarouge, adapté pour réaliser une reconnaissance visuelle des produits présents dans la réserve.

Selon un mode de réalisation particulier, la réserve 56 est absente (le module ne possède pas de réserve), comme c'est le cas pour le module 38 par exemple. Dans ce cas, le module concerné est purement un module de présentation des produits test 54. Si un client veut acheter l'un des produits présentés, il s'adresse par exemple à un vendeur (non représenté).

Le tiroir 60 définit un logement supérieur 66 ouvert vers le haut et avantageusement vers l'avant du présentoir 12A. Le tiroir 60 comprend un organe de détection 68, par exemple situé au fond du logement supérieur 66. Par exemple sur une face inférieure 70, le tiroir 60 comprend une unité de traitement 72 décentralisée, et une source de lumière 74 adaptée pour éclairer un des modules 36 situé en dessous. Le tiroir 60 comprend avantageusement un écran 76 relié à l'unité de traitement 72 et formant par exemple tout ou partie d'une face avant 78 du tiroir.

Selon une variante non représentée, le présentoir ne comporte pas d'écran.

Les écrans 76 des modules 36 situés sur une même ligne sont par exemple en continuité horizontale les uns avec les autres.

En variante ou en complément du ou des produits test 54, le support de produits 52 comprend un ou des produits de présentation 55 (figure 4) associé(s) à l'ensemble de produits 48 du module.

Le ou les produits de présentation 55 ne sont pas destinés à la vente. Ils sont destinés à fournir à un potentiel client (non représenté) des informations visuelles et/ou sonores relatives aux produits 48 du module.

Par exemple, le produit de présentation 55 est un support comportant des informations imprimées ou une image imprimée.

Selon une autre variante (non représentée), le support de produits 52 est dépourvu de produit test 54 et de produit de présentation 55.

Le support de produits 52 comprend un support 80 formant avantageusement un ou des logements 82 pour les produits test 54 et/ou pour le ou les produits de présentation 55, et un organe d'identification 84 représentatif du support de produits.

L'organe d'identification 84 est fixé sur le support 80.

Selon une variante non représentée, le ou les produits de présentation 55 forme(nt) une ou des image(s) imprimée(s) s'étendant dans le ou les logements 82.

Le support de produits 52 est mobile entre une position non installée (figure 4), dans laquelle le support de produit est à l'écart du réceptacle 50, et une position installée (schématisée sur la figure 5), dans laquelle le support de produits est reçu dans le logement supérieur 66 du réceptacle.

Les supports de produits 52 sont avantageusement interchangeables, en ce sens qu'ils peuvent être placés dans n'importe lequel des réceptacles 50 des modules 36. Ceci est symbolisé par les flèches 86 sur la figure 5.

Lorsque le support de produits 52 est dépourvu de produit test 54 ou de produit de présentation 55, c'est-à-dire vide, sa présence dans la position installée est néanmoins détectée grâce à l'organe d'identification 84.

Le support 80 présente avantageusement une forme complémentaire à celle du réceptacle 50, conférant une stabilité au support de produits 52 dans la position installée.

Dans la position installée, l'organe d'identification 84 se trouve à portée de détection par l'organe de détection 68.

L'organe d'identification 84 est par exemple une radio-étiquette (*RFID tag* en anglais) ou un capteur NFC (en anglais *Near Field Communication*).

Selon des variantes non représentées, l'organe d'identification 84 est un code QR, ou un circuit électrique analogique.

L'organe de détection 68 est relié à l'unité de traitement 72. L'organe de détection 68 est adapté pour coopérer avec l'organe d'identification 84 lorsque le support de produits 52 est dans la position installée, pour identifier le support de produits, et pour envoyer à l'unité de traitement 72 une information représentative du fait que le support de produits 52 identifié est dans la position installée.

Lorsque l'organe d'identification 84 est un circuit analogique, l'organe de détection 68 possède des connecteurs (non représentés) adaptés pour coopérer avec l'organe d'identification pour créer des circuits basse tension fermés représentatifs du support de produits 52.

Le capteur 62 est par exemple un accéléromètre fixé sur le tiroir 60, ou bien un capteur de distance entre le tiroir et la partie fixe 58 du réceptacle 50. Le capteur 62 est relié à l'unité de traitement 72 et adapté pour lui envoyer une information représentative de l'ouverture du tiroir.

En variante, le capteur 62 est adapté pour envoyer une information représentative de la fermeture du tiroir 60.

Le système de géolocalisation 42 est adapté pour géolocaliser le présentoir 12A et pour fournir à l'unité de traitement 72 une information de géolocalisation. Le système de géolocalisation 42 comprend par exemple une puce GPS (non représentée) ou un système cellulaire adapté pour indiquer au serveur 14 les tours cellulaires les plus proches et le débit relatif à chacune des tours, et ainsi permettre de calculer une position du présentoir par triangulation des tours cellulaires voisines (non représentées, mais telles que l'antenne 28).

Le système d'intercommunication 44 est avantageusement adapté pour que les unités de traitement 72 du présentoir 12A reçoivent des informations de positionnement :
- représentatives de la position relative les uns par rapport aux autres des réceptacles 50 ayant des supports de produits 52 dans la position installée, et/ou
- pour chacun des réceptacles 50 ayant des supports de produits 52 dans la position installée, représentatives des supports de produits 52 qui sont dans la position installée dans ceux des réceptacles 50 situés dans un voisinage prédéfini dudit chacun réceptacle.

Le système d'intercommunication 44 comprend par exemple des câbles 87 reliant des modules 36, 38 voisins entre eux ou optionnellement des connecteurs sans fil (par exemple magnétique) assurant la communication entre les différents ensembles 36 et 38 voisins.

Par exemple le voisinage prédéfini est assuré par une communication unidirectionnelle, ou optionnellement bidirectionnelle, sur les quatre plus proches modules voisins (par exemple en haut, en bas, à droite, à gauche). La communication entre ces quatre plus proches voisins permet au module 36 ou 38 de reconnaître la présence ou non d'un voisin. S'il y a un voisin, celui-ci échange son identité unique définie par l'ensemble 72 ainsi que sa position relative (par exemple en haut, en bas, à droite, ou à gauche). De fait, l'ensemble des relations permet d'établir de manière dynamique et autonome la position relative des modules 36 et 38 les uns par rapport aux autres.

### Unités de traitement

L'unité de traitement 72 de chaque module 36, 38 comporte un processeur 88 et une mémoire 90. L'unité de traitement 72 est adaptée pour communiquer par internet via le réseau 16 avec le serveur 14.

La mémoire 90 comporte des informations qui, lorsqu'elles sont exécutées par le processeur 88, conduisent avantageusement l'unité de traitement 72 à envoyer à l'écran 76 des informations, par exemple vidéo, contenues dans la mémoire, les informations étant relatives à l'ensemble de produits 48 associé au support de produits 52 identifié.

Avantageusement, la mémoire 90 comporte en outre des informations qui, lorsqu'elles sont exécutées par le processeur, conduisent l'unité de traitement 72 à :
- lire au moins au moins une information contenue dans la mémoire, et envoyer l'information lue au serveur 14, l'information lue étant relative à l'ensemble de produits 48 associé au support de produits 52 identifié, ou représentative du fait que le support de produits 52 identifié est dans la position installée ; et/ou
- envoyer au serveur 14 une demande d'informations concernant l'ensemble de produits 48 associé au support de produits 52 identifié, et/ou d'informations de configuration de l'unité de traitement 72, pour recevoir lesdites informations et les inscrire dans la mémoire.

Selon un mode de réalisation particulier, la mémoire 90 comporte des informations qui, lorsqu'elles sont exécutées par le processeur 88, conduisent l'unité de traitement 72 à :
- si l'information représentative de l'ouverture du tiroir 60 est reçue, lire de nouvelles informations vidéo contenues dans la mémoire, et envoyer les nouvelles informations vidéo à l'écran 76, les nouvelles informations vidéo étant relatives à l'ensemble de produits 48 associé au support de produits 52 identifié, ou
- envoyer au serveur 14 une information représentative de l'ouverture.

Avantageusement encore, la mémoire 90 de l'unité de traitement 72 comporte des informations qui, lorsqu'elles sont exécutées par le processeur 88, conduisent l'unité de traitement 72 à :
- envoyer au serveur 14 lesdites informations de positionnement, et/ou
- envoyer à certains des écrans 76 des informations vidéo synchronisées.

Selon un mode de réalisation particulier, la mémoire 90 d'au moins une des unités de traitement 72 associée à l'un des réceptacles 50 comporte des informations qui, lorsqu'elles sont exécutées par le processeur 88 de l'au moins une des unités de traitement, conduisent l'au moins une des unités de traitement 72 à :
- envoyer des informations à une autre des unités de traitement 72, ou
- à envoyer à celui des écrans 76 qui lui est associé des informations relatives à l'un des ensemble de produits 48 associé à l'un support de produits 52 reçu dans un autre des réceptacles 50.

### Module 38

Le module 38 est fonctionnellement analogue aux modules 36 mais diffère un peu structurellement.

Comme déjà dit, selon un mode de réalisation particulier, le module 38 ne comporte pas de réserve de produits.

Le support 80A du support de produits 52A forme un plateau. L'écran 76A est situé derrière le support de produits 52A pour un observateur (non représenté) situé devant le module 38.

Le module 38 comprend une ou plusieurs caméra(s) 92 adaptée(s) pour reconnaître les produits tests 54 présents sur le support 80A, comme cela est par exemple expliqué dans le document US 10 643 270.

Le module 38 comprend avantageusement un système 94 de reconnaissance faciale d'un client (non représenté) situé devant le module 38.

Le système 94 est avantageusement apte à reconnaître des attributs humains spécifiques tel que le visage, le genre, l'âge, la position du regard, la position du visage dans l'espace, la position du corps (suivi des bras, jambes), et d'estimer l'activité du client (achat, marche, observation produits, communication orale avec un vendeur, etc...). Les informations obtenues par le système 94 sont par exemple stockées dans l'unité de traitement 72 du module 38.

La reconnaissance visuelle de ou des personnes pourra s'effectuer via une unité de traitement spécifique dédiée à la reconnaissance faciale par une intelligence artificielle embarquée dans l'unité de traitement. Cette unité de traitement est par exmple spécifiquement programmée afin de reconnaître des personnes de manière rapide et leur présence autour du présentoir. L'analyse pourra se passer en local dans le présentoir directement sans avoir à envoyer une image de la personne via un réseau de télécommunication grâce à l'utilisation d'une puce dédiée à l'intelligence artificielle.

Le bouton 40 est par exemple connecté à l'unité de traitement 72 du module 38, cette unité de traitement étant configurée pour afficher sur l'écran 76A une information représentative du présentoir lorsque le bouton est actionné par un utilisateur du présentoir.

L'information en question est par exemple un code QR 96.

L'interface 46 est par exemple un terminal ou un téléphone mobile adapté pour lire cette information sur l'écran 76A.

Le fonctionnement du présentoir 12A va maintenant être décrit.

### Reconnaissance d'un support de produits 52

Par exemple pour réaliser un « planogramme », un utilisateur du présentoir 12A, généralement un employé du lieu de vente 18A, place les différents supports de produits 52, 52A dans leur position installée dans les réceptacles 50 des modules 36, 38, conformément au « planogramme ».

Pour chacun des modules 36, 38 ayant reçu un support de produits 52, 52A, l'organe de détection 68 du module coopère avec l'organe d'identification 84 du support de produits pour identifier le support de produits, et pour envoyer à l'unité de traitement 72 une information représentative du fait que le support de produits identifié est dans la position installée.

Le processeur 88 lit des informations contenues dans la mémoire 90 et l'unité de traitement 72 envoie à l'écran 76, 76A des informations vidéo contenues dans la mémoire et relatives à l'ensemble de produits 48 associé au support de produits 52 identifié.

Les informations vidéo sont avantageusement déjà présentes dans la mémoire 90.

En variante, les informations vidéo à afficher sont obtenues du serveur 14 via le réseau 16. Pour ce faire, l'unité de traitement 72 envoie au serveur 14 une demande d'informations concernant l'ensemble de produits 48 associé au support de produits 52 identifié, reçoit lesdites informations et les inscrit dans la mémoire 90.

Ainsi, les informations affichées respectivement par chacun des écrans 76, 76A sont cohérentes avec les ensembles de produits 48 et les produits test 54 effectivement présentés par chacun des modules.

### Remontée d'informations

L'unité de traitement 72 des modules 36, 38 lit au moins une information contenue dans la mémoire 90, et envoie l'information lue au serveur 14, l'information lue étant relative à l'ensemble de produits 48 associé au support de produits 52 identifié, ou représentative du fait que le support de produits 52 identifié est dans la position installée.

La récupération d'informations est réalisée via le réseau 16. Ce réseau est sans fil, par exemple 3G/4G.

Selon une variante non représentée, le réseau est filaire, par exemple ADSL, ou fibre. Selon une autre variante non représentée, le réseau est satellitaire, ou en variante au moins en partie filaire.

L'information est par exemple stockée de manière dynamique (en temps réel) dans chaque unité de traitement 72, et enregistrée sous forme de langage informatique.

Pour la sécurité, une technologie d'encodage de cette information est avantageusement utilisée.

Le transfert d'informations via un réseau 3G/4G avec une connectivité embarquée dans le présentoir 12A présente l'avantage à la marque de ne pas avoir à négocier un accès réseau auprès des responsables des lieux de vente 18A, 18B, 18C.

Ainsi, les présentoirs 12A, 12B, 12C peuvent être entièrement indépendants des réseaux de ces responsables et mis dans un réseau sécurisé (réseau 3G/4G privé, tunnel VPN, etc...).

En cas d'ouverture du tiroir 60 d'un des modules 36, le capteur 62 envoie à l'unité de traitement 72 une information représentative de cette ouverture. Ces informations sont avantageusement stockées localement dans la mémoire 90. Ces informations sont par exemple traitées localement par l'unité de traitement 72 pour calculer un nombre ou un temps d'ouverture, puis envoyées au serveur 14, ou bien envoyées sans traitement.

Le système 94 de reconnaissance faciale du client (non représenté) reconnaît les attributs humains spécifiques précités, et d'estime l'activité du client (par exemple l'un ou plusieurs parmi l'achat, la marche, l'observation des produits test 54, la communication orale avec un vendeur, etc...). Les informations mesurées sont stockées dans l'unité de traitement 72 du module 38, puis envoyées, prétraitées ou non, au serveur 14.

Chacun des capteurs 65 des modules 36 ayant un stock dans la réserve 56 réalise une reconnaissance visuelle des produits présents dans la réserve, et transmet les informations recueillies à l'unité de traitement à laquelle il est relié.

La reconnaissance visuelle de ou des produits pourra s'effectuer via une unité de traitement spécifique dédiée à la reconnaissance produit par une intelligence artificielle embarquée dans l'unité de traitement. Par exemple, cette unité de traitement est spécifiquement programmée afin de reconnaître des produits de manière rapide et leur présence sur la zone de stockage du présentoir. L'analyse peut se passer en local dans le présentoir directement sans avoir à envoyer une image du produit via un réseau de télécommunication grâce à l'utilisation d'un puce dédiée à l'intelligence artificielle

La caméra 92 du module 38 reconnaît les produits tests 54 présents sur le support 80A et envoie des informations correspondantes à l'unité de traitement 72 du module 38.

### Positions relatives des modules

Le système d'intercommunication 44 envoie aux unités de traitement 72 du présentoir 12A les informations de positionnement représentatives de la position relative les uns par rapport aux autres des réceptacles 50 ayant des supports de produits 52 dans la position installée.

Pour chacun des réceptacles 50 ayant des supports de produits 52 dans la position installée, les informations envoyées sont avantageusement représentatives des supports de produits 52 qui sont dans la position installée dans ceux des réceptacles 50 situés dans un voisinage prédéfini dudit chacun réceptacle.

Le système d'intercommunication 44, avec les unités de traitement 72, permet à chacun des modules 36, 38 de reconnaître son ou ses plus proches voisins.

Par exemple, pour un présentoir à plusieurs modules comme le présentoir 12A, pour chacun des modules, l'ensemble des modules situé autour de lui (à 360 degrés) est reconnu, ainsi que leur identité unique.

Grâce à ces informations partagées entre les modules 36, 38, ceux-ci recomposent la constitution et le positionnement des uns par rapports aux autres de manière dynamique (en temps réel) et utilisent cette information dans la gestion de cas de figure (illustrés par la suite) ou dans la distribution de manière synchrone des information vidéos. Pour identifier la position d'un des modules par rapport à un autre, un système de coordonnées des modules est par exemple utilisé, tel que celui défini par les lignes L1 à L4 et les colonnes C1 à C3.

### Déclenchement d'actions lors de la mise en place des supports de produit 52

Le présentoir 12A comporte avantageusement un gestionnaire de cas de figure lui permettant de gérer différentes étapes découlant d'une interaction d'un client avec le présentoir.

Le présentoir 12A est par exemple préalablement configuré avec ces cas de figure lui permettant de savoir comment réagir en fonction des interactions se produisant sur le lieu de vente 18A. Cette configuration est stockée dans la mémoire 90 et modifiable à distance.

Ce gestionnaire de cas de figures est au centre des communications entre différents logiciels avantageusement présents dans les unités de traitement 72 et a pour objectif de proprement traduire un message reçu d'un capteur, de l'analyser de mettre en place des actions correspondantes.

Par exemple, lors de la détection de l'ouverture du tiroir 60 d'un des modules 36, l'unité de traitement 72 concernée reçoit l'information représentative de l'ouverture, lit de nouvelles informations vidéo contenues dans sa mémoire 90, et envoie les nouvelles informations vidéo à l'écran 76, les nouvelles informations vidéo étant relatives à l'ensemble de produits 48 associé au support de produits 52 placé dans le module dont le tiroir vient d'être ouvert. Dit autrement, l'affichage vidéo sur l'écran 76 du module s'adapte au fait que le tiroir 60 vient d'être ouvert.

Selon un mode de réalisation particulier, l'unité de traitement 72 du module dont le tiroir 60 vient d'être ouvert envoie des informations à une autre des unités de traitement 72, afin que le module correspondant à cette autre unité de traitement réalise une action telle que, par exemple, éteindre ou réduire l'intensité de la lumière 74, ou afficher un contenu vidéo particulier.

La communication entre les différents modules 36, 38 du présentoir 12A s'effectue par voie filaire, ou bien sans fil, selon des protocoles connus en eux-mêmes.

### Géolocalisation des supports de produits 52 et des présentoirs pour réception d'informations spécifiques

Le système de géolocalisation 42 géolocalise le présentoir 12A et fournit aux unités de traitement 72 une information de géolocalisation, également reçue par le serveur 14.

Cette information permet de connaître par exemple le pays 20 dans lequel le présentoir 12A est situé. Grâce à cette information, le serveur 14, qui a accès à des informations de prix pratiqués sur le lieu de vente 18A (par le revendeur ou la marque), envoie ces informations de manière dynamique à chacun des modules 36, 38 en fonction des supports de produits 52, 52A installés dans les réceptacles 50.

En variante, la localisation du présentoir 12A est entrée de manière manuelle, par exemple lors de l'installation du présentoir, en utilisant l'interface 46, via une application mobile ou un site web. Pour ce faire, l'utilisateur scanne un code sur le présentoir, par exemple le code QR 96, ou bien sur l'emballage du présentoir, et indique l'adresse ou le présentoir est installé via une interface graphique.

### Détection d'un support de produits dans un présentoir contenant d'autres supports de produits - localisation exacte du support produits dans un présentoir

Grâce au système d'intercommunication 44, chaque module 36, 38 est informé de la position relative de certains des modules par rapport à lui. Avantageusement, chaque module sait de manière dynamique quels supports de produits 52 se trouvent dans son environnement immédiat. La récupération d'information concernant les supports de produits voisins permet par exemple d'informer la marque en temps réel de l'organisation des produits cométiques sur le lieu de vente 18A.

En outre, la communication établie entre les différents modules permet d'informer le client sur les produits présents dans un environnement local. De même, la marque peut informer le personnel du lieu de vente 18A de la bonne marche à suivre afin de respecter le « planogramme ».

### Déclenchement d'actions synchronisées

L'unité de traitement 72 envoie à certains des écrans 76 des informations vidéo synchronisées.

Par exemple, si un client prend un produit A dans un premier module parmi les modules 36, 38, et que ce produit est susceptible d'être utilisé en combinaison avec un produit B présent sur un deuxième module, l'unité de traitement 72 du premier module envoie des informations à l'unité de traitement du deuxième module pour que, par exemple :
- la source de lumière 74 du deuxième module soit déclenchée, et/ou
- des informations vidéo relatives au produit B soient affichées sur l'écran 76, 76A du deuxième module.

L'unité de traitement 72 d'un des modules envoie avantageusement à certains des écrans 76 des informations vidéo synchronisées. Ceci permet de synchroniser les contenus vidéos et de créer un contenu dit « étendu ». Pour ce faire, un contenu étendu passant à travers tous les écrans des modules et respectant le positionnement relatif d'un module par rapport à un autre est découpé et distribué à chaque écran de manière individuelle et synchronisée. Deux méthodes de synchronisation des contenus individuels sont notamment possibles : active ou passive.

Dans la synchronisation active, les modules communiquant en temps réel avec leurs voisins présents dans le réseau (sans fil ou filaire), un des modules agit en tant que maître, et dicte aux autres, les esclaves, la marche à suivre. Le maître envoie aux esclaves la position exacte du contenu vidéo qu'il est en train d'afficher, ainsi que le contenu qu'il est en train d'afficher. Les esclaves ont pour responsabilité de suivre le maître et de s'assurer d'être à la même séquence d'image de la vidéo en train de jouer sur l'écran 76 ou 76A du maître. Dans le cas où un des esclaves serait en avance ou retard d'une ou plusieurs séquences d'images, il passe ces séquences d'images pour attendre ou accélérer vers le maître.

Au cas où le maître ne serait plus dans le réseau, un autre maître est désigné dans le réseau. Au démarrage, le positionnement du maître est défini dans le réseau (ex : Master position est en C1). Ce positionnement s'opère au démarrage une fois le procédé de positionnent dynamique réalisé (positions relative d'un ensemble 36 par rapport à un autre) et après vérification que les modules dans le réseau sont dans une position équivalente au positionnement antérieur/historique. Si le maître est perdu en cours d'utilisation d'un ensemble de modules, un autre maître est automatiquement choisi afin d'assurer que tous les esclaves agissent conformément à la marche à suivre.

Dans la synchronisation passive, les modules n'ont pas d'intercommunication directe dans un réseau local, mais via un réseau de télécommunication externe, par exemple 3G/4G. La gestion de positionnement des séquence vidéos est effectuée au niveau du serveur 14 et chaque module se synchronise de manière individuelle. Chaque module reçoit le moment exact ou telle séquence de contenu vidéo doit être jouée. Ainsi, lorsque l'unité de traitement 72 télécharge le contenu vidéo du serveur 14, elle télécharge aussi les commandes ou ordres de synchronisation qui lui permettront d'être en synchronisation avec ses proches voisins sans avoir d'intercommunication avec ces derniers dans un réseau local. Afin de gérer cette synchronisation, l'heure locale du présentoir correspond entre les différents éléments du système, afin que la synchronisation préétablie par le serveur soit correcte et précise, et que les synchronisations des séquences vidéo correspondent entre les différents modules 36 et 38.

La distribution de contenus spécifiques à chaque écran 76, 76A est avantageusement liée à la fois au positionnement relatif établi préalablement, mais aussi aux supports de produits 52 effectivement reçus dans chacun des réceptacles 50.

### Mise à jour des contenus à distance

L'unité de traitement 72 d'un module envoie au serveur 14 une demande d'informations concernant l'ensemble de produits 48 associé au support de produits 52 identifié, et/ou d'informations de configuration de l'unité de traitement 72. L'unité de traitement 72 reçoit lesdites informations et les inscrit dans la mémoire 90.

La connexion au serveur 14 se fait par un réseau local (Wifi/Bluetooth) ou externe (réseau 3G/4G). Chaque module pré-charge sur sa mémoire 90 le ou les contenus nécessaires à l'utilisation du module et la gestion des cas d'utilisations (par exemple : que faire quand un tiroir s'ouvre, etc...).

En variante, les contenus sont téléchargés en temps réel au moment où l'un des supports de produit 52 est mis dans la position installée (c'est-à-dire est placé dans le réceptacle 50).

Par exemple, si une marque souhaite envoyer un nouveau support de produits 52, l'organe d'identification 84 unique est reconnu par l'organe d'identification 68 du réceptacle 50 dans lequel le nouveau support de produits est placé.

Lors de la mise en place du support de produits 52, soit le contenu vidéo relatif à l'ensemble de produits 48 correspondant au support de produits est déjà présent dans la mémoire 90 du module concerné et est affiché directement, soit le contenu n'a pas été chargé et le module télécharge automatiquement le contenu sur sa mémoire via le réseau mise en place dans le lieu de vente.

### Maintenance des modules à distance

L'unité de traitement 72 envoie au serveur 14 une demande d'informations de configuration de l'unité de traitement 72, reçoit lesdites informations et les inscrit dans la mémoire 90.

Ainsi, des opérations de maintenance sont réalisées à distance, par exemple de mise à jour de contenus, de modification des cas de figures/expériences en magasin, de gestion de la luminosité des écrans, etc... En outre, il est possible d'indiquer au personnel du lieu de vente si une un support de produits 52 est mal placé ou doit être retiré pour respecter un « planogramme ».

### Vérification à distance du nombre d'ouvertures et fermetures d'un module - gestion préventive du stock

Comme expliqué ci-dessus, le nombre d'ouvertures et/ou de fermetures du tiroir 60 est connu. Grâce à cette information transmise au serveur 14, il est par exemple possible d'envoyer à la marque une estimation de l'utilisation du tiroir 60 de chacun des modules, et aussi de la rentabilité de tel ou tel produit 32 correspondant à un des supports de produits 52.

Grâce aux capteurs 65, il est possible de vérifier le stock présent dans les réserves 56 des différents modules du présentoir, et ainsi permettre de confirmer le stock global présent dans le présentoir. Pour ce faire, un capteur infrarouge peut être utilisé par exemple. Celui-ci permet de connaître la taille disponible dans l'espace de stockage 56, l'unité de traitement 72 sachant quel support de produits 52 est présent sur le module 36, elle peut télécharger l'encombrement pris par le ou les produits présent(s) dans le stock derrière le support de produits 52 depuis le serveur 14 et ainsi pourra calculer le nombre de stock restant. Il est ainsi possible d'évaluer les besoins nécessaires pour la marque.

En variante, une reconnaissance de produit par caméra, telle que décrite dans US 10 643 270, est mise en œuvre afin d'éviter l'utilisation d'un capteur infrarouge.

### Envoi d'offres promotionnelles au client lors de son interaction avec le présentoir

Ces interactions peuvent inclure l'un ou plusieurs parmi : l'ouverture de tiroir, la fermeture de tiroir, la reconnaissance produit sur une zone dédiée, reconnaissance faciale sur une zone dédiée.

Le présentoir 12A permet à la marque de gérer comme indiqué ci-dessus les conséquences des actions d'un client sur le présentoir. Par exemple, la marque peut déclencher l'affichage d'un contenu promotionnel spécifique à l'ouverture d'un tiroir.

Avantageusement, le présentoir réalise une détection faciale grâce au système 94 et affiche un contenu spécifique au client détecté, par exemple en fonction de facteurs démographiques (âge, sexe, humeur du consommateur).

Si une véritable reconnaissance faciale est réalisée, une information dédiée à un client spécifique pourra être envoyée au consommateur lors de l'interaction avec le présentoir. Bien entendu cette information sera en corrélation avec les produits présents sur le support de produits ou les produits se trouvant dans le réseau local. La base de données des clients pourra être téléchargée depuis un serveur externe (par exemple : serveur 14) et sera en lien avec le logiciel de gestion de la relation client de la marque. Il va de soi que le logiciel respectera les règles de protection de la vie privée mise en place dans les législations locales et sera aussi aligné avec les conditions auquel le client a souscrit via le logiciel de gestion de la relation client de la marque.

### Contrôle par bouton 40 ou l'interface 46 pour vérifier un « planogramme »

L'unité de traitement 72 des modules pourra embarquer des réseaux sans fil tel que Bluetooth ou wifi par exemple. Cela permet un contrôle par un utilisateur du présentoir sur le lieu de vente. Par exemple, un des écrans 76, 76A du présentoir indique à l'utilisateur de se connecter à un réseau local wifi. Une fois connecté, l'utilisateur scanne le code QR 96 affiché par le présentoir et est redirigé sur une page web locale (non représentée) lui permettant de gérer le présentoir. Ceci permet aussi la gestion d'un « planogramme » par le personnel du lieu de vente. Cela ouvre un champ de possibilités pour la marque afin de rendre le point de vente interactif pour le client tout en liant cela aux produits 32 présents sur le ou les présentoirs.

Grâce aux caractéristiques décrites ci-dessus, le présentoir 12A assure que les informations vidéo affichées, par exemple un prix de vente, correspondent effectivement aux produits test 54 présentés. Ceci facilite la mise en œuvre des « planogrammes ».

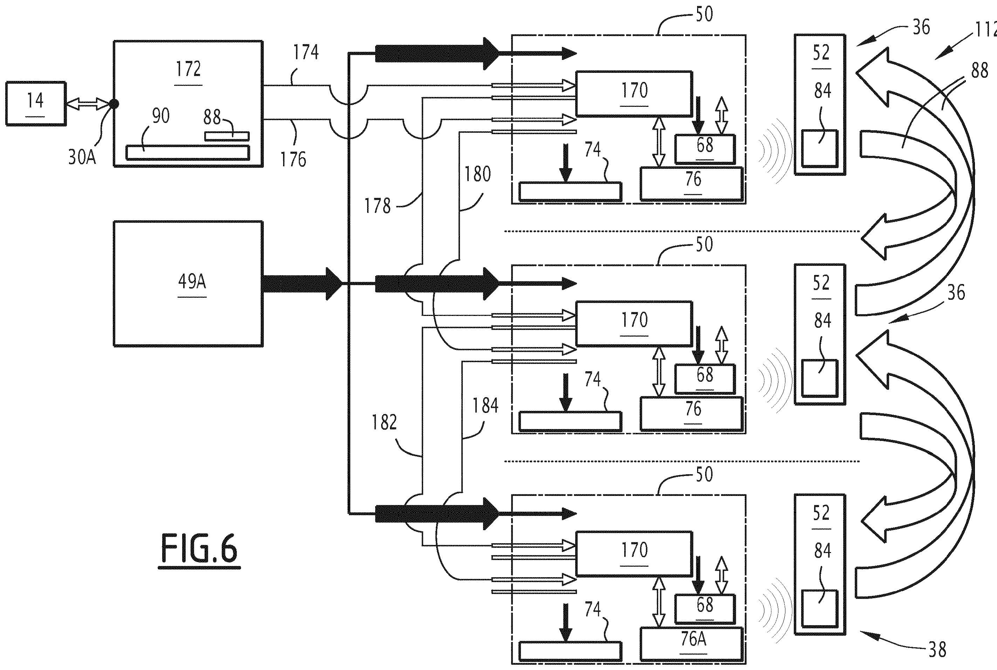

En référence à la figure 6, on va maintenant décrire brièvement un présentoir 112 selon un deuxième mode de réalisation de l'invention. Le présentoir 112 est analogue au présentoir 12A représentés sur les figures 1 à 5. Les éléments similaires portent les mêmes références numériques et ne seront pas décrits à nouveau. Seules les différences seront décrites en détail ci-après.

Les modules 36 et le module 38 du présentoir 112 ne possèdent pas d'unité de traitement 72 individuelles et décentralisées, mais avantageusement une puce 170 de gestion des vidéos.

La puce 170 d'un des modules 36 (situé en haut de la figure 6) est relié à une unité centrale 172 unique du présentoir 112 par un câble vidéo entrant 174, et avantageusement par un câble de position entrant 176.

La puce 170 du module 36 situé au centre de la figure 6 est reliée à la puce 170 du module 36 du haut par un câble vidéo 178, et avantageusement par un câble de position 180.

De même, la puce 170 du module 38 (situé en bas de la figure 6) est reliée à la puce 170 du module 36 du centre par un câble vidéo 180, et avantageusement par un câble de position 182.

Ainsi les modules 36, 38 du présentoir 112 sont connectés entre eux en cascade.

L'unité de traitement 172 du présentoir assure avec les puces 170 les mêmes fonctions que chacune des unités de traitement 72 du présentoir 12A. La puce 170 permet le transfert de vidéos ainsi que des commandes issues de l'unité de traitement 172 via un protocole informatique en série.

Les câbles de position assurent les mêmes fonctions que le système de positionnement 44 du présentoir 12A et permet aussi l'envoi d'information permettant la gestion des cas d'utilisation spécifiques au module 36 (par exemple : si le module 38 a un produit 54 qui n'est plus dans le champ de vision de la caméra 92, cette information sera envoyée à l'unité de traitement 172 qui traite cette information grâce au processeur 88 et vérifie si une commande spécifique à cette application existe dans le logiciel de gestion des cas d'utilisation stocké dans la mémoire 90. Cette dernière lui indique qu'il faut allumer un module 36 en position C2-L2. Par conséquent l'unité de traitement 172 envoie la commande au module 36 du haut via le câble de position/commande 176.

Le présentoir 112 fonctionne de manière analogue au présentoir 12A, si ce n'est que les fonctions « intelligentes » sont concentrées dans l'unité de traitement 172, relayée par les puces 170.

Le présentoir 112 offre les mêmes avantages que le présentoir 12A. Toutefois, son architecture en série permet de réduire les coûts de matériel. Cependant, il est important de noter que cette architecture implique un nombre plus important de câbles et donc une installation plus complexe, ce qui peut impliquer un coût d'installation plus important.

## Revendications

1. Présentoir de vente (12A, 112) adapté pour présenter un ou plusieurs produits (32), notamment cosmétiques, et réaliser une publicité du ou des produits (32) sur un lieu de vente (18A), le présentoir (12A, 112) comprenant au moins un module (36, 38) destiné à la présentation d'au moins un ensemble de produits (48), le présentoir (12A, 112) comprenant un châssis (34), au moins une unité de traitement (72, 172) comportant un processeur (88) et une mémoire (90), le module (36, 38) comprenant :
- optionnellement une réserve (56) comportant un stock dudit ensemble de produits (48),
- un réceptacle (50) monté sur le châssis (34) et comportant un organe de détection (68), et
- un support de produits (52),
**caractérisé en ce que** le support de produits (52) comprend un organe d'identification (84) représentatif du support de produits (52), le support de produits (52) étant mobile entre une position non installée, dans laquelle le support de produits est à l'écart du réceptacle (50), et une position installée, dans laquelle le support de produits (52) est reçu dans le réceptacle (50),
l'organe de détection (68) étant adapté pour coopérer avec l'organe d'identification (84), lorsque le support de produits (52) est dans la position installée, pour identifier le support de produits (52), et pour envoyer à l'unité de traitement (72, 172) une information représentative du fait que le support de produits (52) identifié est dans la position installée, la mémoire (90) comportant des informations qui, lorsqu'elles sont exécutées par le processeur (88), conduisent l'unité de traitement (72, 172) à envoyer des informations contenues dans la mémoire (90) à un serveur (14) via un réseau (16), et/ou à un écran (76, 76A) du présentoir (12A, 112), les informations envoyées étant relatives au moins à l'ensemble de produits (48) associé au support de produits (52) identifié.

2. Présentoir (12A, 112) selon la revendication 1, dans lequel le support de produits (52) comprend au moins un produit test (54) associé à l'ensemble de produits (48).

3. Présentoir (12A, 112) selon la revendication 1 ou 2, dans lequel le support de produits (52) comprend au moins un produit de présentation (55) associé à l'ensemble de produits (48).

4. Présentoir (12A, 112) selon l'une quelconque des revendications 1 à 3, dans lequel l'organe d'identification (84) comprend :
- une radio-étiquette,
- un code QR, ou
- un circuit électrique analogique.

5. Présentoir (12A, 112) selon l'une quelconque des revendications 1 à 4, dans lequel la mémoire (90) comporte en outre des informations qui, lorsqu'elles sont exécutées par le processeur (88), conduisent l'unité de traitement (72, 172) à :
- lire au moins une information contenue dans la mémoire (90), et envoyer l'information lue au serveur (14), l'information lue étant relative à l'ensemble de produits (48) associé au support de produits (52) identifié, ou représentative du fait que le support de produits (52) identifié est dans la position installée, et/ou
- envoyer au serveur (14) une demande d'informations concernant l'ensemble de produits (48) associé au support de produits (52) identifié, et/ou d'informations de configuration de l'unité de traitement (72, 172), recevoir lesdites informations et les inscrire dans la mémoire (90).

6. Présentoir (12A, 112) selon l'une quelconque des revendications 1 à 5, comprenant en outre :
- au moins un capteur (94) adapté pour réaliser une détection faciale d'un utilisateur du présentoir (12A, 112), et/ou
- un capteur (65) de suivi dudit stock par reconnaissance visuelle des produits dudit stock.

7. Présentoir (12A, 112) selon l'une quelconque des revendications 1 à 6, dans lequel le réceptacle (50) comprend une partie fixe (58) solidaire du châssis (34), un tiroir (60) monté mobile sur la partie fixe (58), et un capteur (62) adapté pour détecter une ouverture ou une fermeture du tiroir (60) et envoyer une information représentative de l'ouverture ou de la fermeture à l'unité de traitement (72, 172).

8. Présentoir (12A, 112) selon la revendication 7, dans lequel la mémoire (90) comporte des informations qui, lorsqu'elles sont exécutées par le processeur (88), conduisent l'unité de traitement (72, 172) à :
- lire de nouvelles informations contenues dans la mémoire (90), et envoyer les nouvelles informations à l'écran (76, 76A), les nouvelles informations étant relatives à l'ensemble de produits (48) associé au support de produits (52) identifié, ou
- envoyer au serveur (14) une information représentative de l'ouverture ou de la fermeture.

9. Présentoir (12A, 112) selon l'une quelconque des revendications 1 à 8 comportant :
- un système de géolocalisation (42) adapté pour géolocaliser le présentoir (12A, 112) et fournir à l'unité de traitement (72, 172) une information de géolocalisation, ou
- une interface (46) permettant à un utilisateur du présentoir (12A, 112) de fournir à l'unité de traitement (72, 172) une information de géolocalisation.

10. Présentoir (12A, 112) selon l'une quelconque des revendications 1 à 9 comportant en outre un bouton (40) connecté à l'unité de traitement (72, 172), l'unité de traitement (72, 172) étant configurée pour afficher sur l'écran (76, 76A) une information représentative du présentoir (12A, 112) lorsque le bouton (40) est actionné par un utilisateur du présentoir (12A, 112).

11. Présentoir (12A, 112) selon l'une quelconque des revendications 1 à 10, comprenant une pluralité de modules (36, 38) destinés à la présentation d'une pluralité d'ensemble de produits (48), chacun des modules (36, 38) comprenant :
- optionnellement une réserve (56) comportant un stock dudit ensemble de produits (48),
- soit une unité de traitement (72) décentralisée comportant un processeur (88) et une mémoire (90), soit une puce (170) de gestion vidéo connectée sur l'unité de traitement (172) centralisée du présentoir (12A, 112),
- un écran (76, 76A) connecté à l'unité de traitement (72) décentralisée ou à la puce (170),
- un réceptacle (50) monté sur le châssis (34) et comportant un organe de détection (68), et
- un support de produits (52) comprenant un organe d'identification (84) représentatif du support de produits (52), le support de produits (52) étant mobile entre une position non installée, dans laquelle le support de produit est à l'écart du présentoir (12A, 112), et une position installée, dans laquelle le support de produits (52) est reçu dans le réceptacle (50), l'organe de détection (68) étant adapté pour coopérer avec l'organe d'identification (84) lorsque le support de produits (52) est dans la position installée, pour identifier le support de produits (52), et pour envoyer à l'unité de traitement (72) décentralisée ou à l'unité de traitement (172) du présentoir (12A, 112) une information représentative du fait que le support de produits (52) identifié est dans la position installée,
la mémoire (90) de l'unité de traitement (72) décentralisée ou de l'unité de traitement (172) du présentoir (12A, 112) comportant des informations qui, lorsqu'elles sont exécutées par le processeur (88) de l'unité de traitement (72) décentralisée ou de l'unité de traitement (172) du présentoir (12A, 112), conduisent l'unité de traitement (72) décentralisée ou l'unité de traitement (172) du présentoir (12A, 112) à envoyer à l'écran (76, 76A) des informations vidéo contenues dans la mémoire (90), les informations vidéo étant relatives à l'ensemble de produits (48) associé au support de produits (52) identifié.

12. Présentoir (12A, 112) selon la revendication 11, comportant en outre un système d'intercommunication (44) des modules (36, 38) adapté pour que les unités de traitement (72) décentralisées ou l'unité de traitement (172) du présentoir (12A, 112) reçoivent des informations de positionnement :
- représentatives de la position relative les uns par rapport aux autres des réceptacles (50) ayant des supports de produits dans la position installée, et/ou
- pour chacun des réceptacles (50) ayant des supports de produits dans la position installée, représentatives des supports de produits qui sont dans la position installée dans ceux des réceptacles (50) situés dans un voisinage prédéfini dudit chacun des réceptacles (50).

13. Présentoir (12A, 112) selon la revendication 12, dans lequel la mémoire (90) de l'unité de traitement (172) du présentoir (12A, 112) ou d'au moins une des unités de traitement (72) décentralisées comporte des informations qui, lorsqu'elles sont exécutées par le processeur (88) de l'unité de traitement (172) du présentoir (12A, 112) ou de l'au moins une des unités de traitement (72) décentralisée, conduisent l'unité de traitement (172) du présentoir (12A, 112) ou l'au moins une des unités de traitement (72) décentralisées à :
- envoyer au serveur (14) lesdites informations de positionnement, et/ou
- envoyer à certains des écrans (76, 76A) des informations vidéo synchronisées.

14. Présentoir (12A, 112) selon la revendication 12 ou 13, dans lequel la mémoire (90) d'au moins une des unités de traitement (72) décentralisées associée à l'un des réceptacles (50), comporte des informations qui, lorsqu'elles sont exécutées par le processeur (88) de l'au moins une des unités de traitement (72) décentralisées, conduisent l'au moins une des unités de traitement (72) décentralisées à :
- envoyer des informations à une autre des unités de traitement (72) décentralisées, ou
- à envoyer à celui des écrans (76, 76A) qui lui est associé des informations relatives à l'un des ensemble de produits (48) associé à l'un des supports de produits (52) reçu dans un autre des réceptacles (50).

15. Procédé de présentation d'un ou plusieurs produits (32), notamment cosmétiques, sur un lieu de vente (18A) pour réaliser une publicité du ou des produits (32) sur le lieu de vente (18A), mettant en œuvre un présentoir (12A, 112) selon l'une quelconque des revendication 1 à 14, et **caractérisé en ce qu'**il comprend les étapes suivantes :
- déplacement du support de produits (52) entre la position non installée et la position installée,
- coopération de l'organe de détection (68) avec l'organe d'identification (84) pour identifier le support de produits (52), et pour envoyer à l'unité de traitement (72, 172) une information représentative du fait que le support de produits (52) identifié est dans la position installée,
- lecture, par le processeur (88), d'informations contenues dans la mémoire (90), et
- envoi, par l'unité de traitement (72, 172), d'informations contenues dans la mémoire (90) au serveur (14) via le réseau (16), et/ou à l'écran (76, 76A), les informations étant relatives au moins à l'ensemble de produits (48) associé au support de produits (52) identifié.

## Patentansprüche

1. Verkaufsständer (12A, 112), der angepasst ist, um ein oder mehrere Produkte (32), insbesondere Kosmetika, zu präsentieren und eine Werbung für das oder die Produkte (32) an einem Verkaufsort (18A) durchzuführen, der Ständer (12A, 112) umfassend mindestens ein Modul (36, 38), das zur Präsentation von mindestens einem Satz von Produkten (48) bestimmt ist, der Ständer (12A, 112) umfassend einen Rahmen (34), mindestens eine Verarbeitungseinheit (72, 172), umfassend einen Prozessor (88) und einen Speicher (90), das Modul (36, 38) umfassend:
- optional ein Lager (56), das einen Bestand des genannten Satzes von Produkten (48) umfasst,
- ein Behältnis (50), das auf dem Rahmen (34) montiert ist und ein Erfassungselement (68) aufweist, und
- einen Produktträger (52),
**dadurch gekennzeichnet, dass** der Produktträger (52) ein Identifikationselement (84) umfasst, das repräsentativ für den Produktträger (52) ist, wobei der Produktträger (52) zwischen einer nicht installierten Position, in der der Produktträger von dem Behältnis (50) entfernt ist, und einer installierten Position, in der der Produktträger (52) in das Behältnis (50) aufgenommen ist, beweglich ist,
das Erfassungselement (68) angepasst ist, um mit dem Identifikationselement (84) zusammenzuwirken, wenn der Produktträger (52) in der installierten Position ist, um den Produktträger (52) zu identifizieren, und um an die Verarbeitungseinheit (72, 172) eine Information zu senden, die repräsentativ dafür ist, dass der identifizierte Produktträger (52) in der installierten Position ist, wobei der Speicher (90) Informationen aufweist, die, wenn sie von dem Prozessor (88) ausgeführt werden, die Verarbeitungseinheit (72, 172) dazu veranlassen, die in dem Speicher (90) enthaltenen Informationen über ein Netzwerk (16) an einen Server (14) und/oder an einen Bildschirm (76, 76A) des Ständers (12A, 112) zu senden, wobei sich die gesendeten Informationen zumindest auf den Satz von Produkten (48) beziehen, der mit dem identifizierten Produktträger (52) assoziiert ist.

2. Ständer (12A, 112) nach Anspruch 1, wobei der Produktträger (52) mindestens ein Testprodukt (54) aufweist, das mit dem Satz von Produkten (48) assoziiert ist.

3. Ständer (12A, 112) nach Anspruch 1 oder 2, wobei der Produktträger (52) mindestens ein Präsentationsprodukt (55) umfasst, das mit dem Satz von Produkten (48) assoziiert ist.

4. Ständer (12A, 112) nach einem der Ansprüche 1 bis 3, wobei das Identifikationselement (84) Folgendes umfasst:
- ein Funketikett,
- einen QR-Code oder
- eine analoge elektrische Schaltung.

5. Ständer (12A, 112) nach einem der Ansprüche 1 bis 4, wobei der Speicher (90) ferner Informationen enthält, die, wenn sie von dem Prozessor (88) ausgeführt werden, die Verarbeitungseinheit (72, 172) zu Folgendem veranlassen:
- Lesen mindestens einer Information aus dem Speicher (90) und Senden der gelesenen Information an den Server (14), wobei sich die gelesene Information auf den Satz von Produkten (48) bezieht, der mit dem identifizierten Produktträger (52) assoziiert ist, oder repräsentativ dafür ist, dass der identifizierte Produktträger (52) in der installierten Position ist, und/oder
- Senden, an den Server (14), einer Anforderung nach Informationen über den Satz von Produkten (48), der mit dem identifizierten Produktträger (52) assoziiert ist, und/oder nach Informationen über die Konfiguration der Verarbeitungseinheit (72, 172), Empfangen der Informationen und Schreiben dieser Informationen in den Speicher (90).

6. Ständer (12A, 112) nach einem der Ansprüche 1 bis 5, ferner umfassend:
- mindestens einen Sensor (94), der angepasst ist, um eine Gesichtserkennung eines Benutzers des Ständers (12A, 112) durchzuführen, und/oder
- einen Sensor (65) zur Verfolgung des genannten Bestands durch visuelle Erkennung der Produkte des Bestands.

7. Ständer (12A, 112) nach einem der Ansprüche 1 bis 6, wobei das Behältnis (50) einen festen Teil (58), der fest mit dem Rahmen (34) verbunden ist, ein Schubfach (60), das beweglich an dem festen Teil (58) montiert ist, und einen Sensor (62) umfasst, der angepasst ist, um ein Öffnen oder Schließen des Schubfachs (60) zu erfassen und eine Information, die repräsentativ für das Öffnen oder Schließen ist, an die Verarbeitungseinheit (72, 172) zu senden.

8. Ständer (12A, 112) nach Anspruch 7, wobei der Speicher (90) Informationen aufweist, die, wenn sie von dem Prozessor (88) ausgeführt werden, die Verarbeitungseinheit (72, 172) zu Folgendem veranlassen:
- Lesen neuer Informationen aus dem Speicher (90) und Senden der neuen Informationen an den Bildschirm (76, 76A), wobei sich die neuen Informationen auf den Satz von Produkten (48) beziehen, der mit dem identifizierten Produktträger (52) assoziiert ist, oder
- Senden, den Server (14), einer Information, die repräsentativ für das Öffnen oder Schließen ist.

9. Ständer (12A, 112) nach einem der Ansprüche 1 bis 8, umfassend:
- ein Geolokalisierungssystem (42), das angepasst ist, um den Ständer (12A, 112) zu geolokalisieren und der Verarbeitungseinheit (72, 172) eine Geolokalisierungsinformation bereitzustellen, oder
- eine Schnittstelle (46), die es einem Benutzer des Ständers (12A, 112) ermöglicht, der Verarbeitungseinheit (72, 172) eine Geolokalisierungsinformation bereitzustellen.

10. Ständer (12A, 112) nach einem der Ansprüche 1 bis 9, ferner umfassend eine Taste (40), die mit der Verarbeitungseinheit (72, 172) verbunden ist, wobei die Verarbeitungseinheit (72, 172) konfiguriert ist, um auf dem Bildschirm (76, 76A) eine für den Ständer (12A, 112) repräsentative Information anzuzeigen, wenn die Taste (40) von einem Benutzer des Ständers (12A, 112) betätigt wird.

11. Ständer (12A, 112) nach einem der Ansprüche 1 bis 10, umfassend eine Vielzahl von Modulen (36, 38), die zur Präsentation einer Vielzahl von Sätzen von Produkten (48) sind, jedes der Module (36, 38) umfassend:
- optional ein Lager (56), das einen Bestand des genannten Satzes von Produkten (48) umfasst,
- entweder eine dezentrale Verarbeitungseinheit (72), umfassend einen Prozessor (88) und einen Speicher (90) oder einen Videomanagement-Chip (170), der mit der zentralen Verarbeitungseinheit (172) des Ständers (12A, 112) verbunden ist,
- einen Bildschirm (76, 76A), der mit der dezentralen Verarbeitungseinheit (72) oder dem Chip (170) verbunden ist,
- ein Behältnis (50), das auf dem Rahmen (34) montiert ist und ein Erfassungselement (68) aufweist, und
- einen Produktträger (52), umfassend ein Identifikationselement (84), das repräsentativ für den Produktträger (52) ist, wobei der Produktträger (52) zwischen einer nicht installierten Position, in der der Produktträger von dem Ständer (12A, 112) entfernt ist, und einer installierten Position, in der der Produktträger (52) in das Behältnis (50) aufgenommen ist, beweglich ist, das Erfassungselement (68) angepasst ist, um mit dem Identifikationselement (84) zusammenzuwirken, wenn der Produktträger (52) in der installierten Position ist, um den Produktträger (52) zu identifizieren, und um an die dezentrale Verarbeitungseinheit (72) oder die Verarbeitungseinheit (172) des Ständers (12A, 112) eine Information zu senden, die repräsentativ dafür ist, dass der identifizierte Produktträger (52) in der installierten Position ist,
der Speicher (90) der dezentralen Verarbeitungseinheit (72) oder der Verarbeitungseinheit (172) des Ständers (12A, 112) umfassend Informationen, die, wenn sie von dem Prozessor (88) der dezentralen Verarbeitungseinheit (72) oder der Verarbeitungseinheit (172) des Ständers (12A, 112) ausgeführt werden, die dezentrale Verarbeitungseinheit (72) oder die Verarbeitungseinheit (172) des Ständers (12A, 112) dazu veranlassen, in dem Speicher (90) enthaltene Videoinformationen an den Bildschirm (76, 76A) zu senden, wobei sich die Videoinformationen auf den Satz von Produkten (48) beziehen, der mit dem identifizierten Produktträger (52) assoziiert ist.

12. Ständer (12A, 112) nach Anspruch 11, ferner umfassend ein Interkommunikationssystem (44) der Module (36, 38), das angepasst ist, damit die dezentralen Verarbeitungseinheiten (72) oder die Verarbeitungseinheit (172) des Ständers (12A, 112) Positionsinformationen empfangen, die:
- repräsentativ für die relative Position der Behältnisse (50) mit Produktträgern in der installierten Position zueinander sind, und/oder
- für jedes der Behältnisse (50), das Produktträger in der installierten Position aufweist, repräsentativ für die Produktträger sind, die in der installierten Position in jenen der Behältnisse (50) befinden, die sich in einer vordefinierten Nachbarschaft des jeweiligen der Behältnisse (50) befinden.

13. Ständer (12A, 112) nach Anspruch 12, wobei der Speicher (90) der Verarbeitungseinheit (172) des Ständers (12A, 112) oder mindestens einer der dezentralen Verarbeitungseinheiten (72) Informationen umfasst, die, wenn sie von dem Prozessor (88) der Verarbeitungseinheit (172) des Ständers (12A, 112) ausgeführt werden, oder der mindestens einen dezentralen Verarbeitungseinheit (72) verarbeitet werden, die Verarbeitungseinheit (172) des Ständers (12A, 112) oder die mindestens eine der dezentralen Verarbeitungseinheiten (72) zu Folgendem veranlassen:
- Senden der Positionsinformationen an den Server (14), und/oder
- Senden synchronisierter Videoinformationen an einige der Bildschirme (76, 76A).

14. Ständer (12A, 112) nach Anspruch 12 oder 13, wobei der Speicher (90) von mindestens einer der dezentralen Verarbeitungseinheiten (72), der mit einem der Behältnisse (50) assoziiert ist, Informationen umfasst, die, wenn sie von dem Prozessor (88) der mindestens einen der dezentralen Verarbeitungseinheiten (72) ausgeführt werden, die mindestens eine der dezentralen Verarbeitungseinheiten (72) zu Folgendem veranlassen:
- Senden von Informationen an eine andere der dezentralen Verarbeitungseinheiten (72), oder
- Senden, an jenen der Bildschirme (76, 76A), der mit ihr assoziiert ist, von Informationen, die sich auf einen der Sätze von Produkten (48) beziehen, der mit dem einem der Produktträger (52) assoziiert ist, der in einem anderen der Behältnisse (50) aufgenommen wurde.

15. Präsentationsverfahren eines oder mehrerer Produkte (32), insbesondere Kosmetika, an einem Verkaufsort (18A), um eine Werbung für das oder die Produkte (32) an dem Verkaufsort (18A) durchzuführen, wobei ein Ständer (12A, 112) nach einem der Ansprüche 1 bis 14 eingesetzt wird, und **dadurch gekennzeichnet, dass** es die folgenden Schritte umfasst:
- Bewegen des Produktträgers (52) zwischen der nicht installierten und der installierten Position,
- Zusammenwirken des Erfassungselements (68) mit dem Identifikationselement (84), um den Produktträger (52) zu identifizieren, und um an die Verarbeitungseinheit (72, 172) eine Information zu senden, die repräsentativ dafür ist, dass der identifizierte Produktträger (52) in der installierten Position ist,
- Lesen, durch den Prozessor (88), von Informationen, die in dem Speicher (90) enthalten sind, und
- Senden, durch die Verarbeitungseinheit (72, 172), von Informationen, die in dem Speicher (90) enthalten sind, über das Netz (16) an den Server (14) und/oder an den Bildschirm (76, 76A), wobei sich die Informationen zumindest auf den Satz von Produkten (48) beziehen, der mit dem identifizierten Produktträger (52) assoziiert ist.

## Claims

1. A sales display unit (12A, 112) adapted to present one or several products (32), in particular cosmetics, and to advertise the product(s) (32) at a point of sale (18A), the display unit (12A, 112) comprising at least one module (36, 38) for presenting at least one set of products (48), the display unit (12A, 112) comprising a frame (34), at least one processing unit (72, 172) comprising a processor (88) and a memory (90), the module (36, 38) comprising:
- optionally a reserve (56) containing a stock of said set of products (48),
- a receptacle (50) mounted on the frame (34) and comprising a detection member (68), and
- a product support (52),
**characterized in that** the product support (52) comprises an identification member (84) representative of the product support (52), the product support (52) being movable between an uninstalled position, in which the product support is away from the receptacle (50), and an installed position, in which the product support (52) is received in the receptacle (50),
the detection member 68 being adapted to cooperate with the identification member (84) when the product support (52) is in the installed position, in order to identify the product support (52), and to send to the processing unit (72, 172) information representative of the identified product support (52) being in the installed position,
the memory (90) comprising information which, when executed by the processor (88), causes the processing unit (72, 172) to send information contained in the memory (90) to a server (14) via a network (16), and/or to a screen (76, 76A) of the display unit (12A, 112), the information sent relating to at least the set of products (48) associated with the identified product support (52).

2. The display unit (12A, 112) according to claim 1, wherein the product support (52) comprises at least one sample product (54) associated with the product set (48).

3. The display unit (12A, 112) according to claim 1 or 2, wherein the product support (52) comprises at least one display product (55) associated with the product set (48).

4. The display unit (12A, 112) according to any one of claims 1 to 3, wherein the identification member (84) comprises:
- a radio tag,
- a QR code, or
- an analog electrical circuit.

5. The display unit (12A, 112) according to any one of claims 1 to 4, wherein the memory (90) further comprises information which, when executed by the processor (88), causes the processing unit (72, 172) to:
- read at least one piece of information from the memory (90), and send the read piece of information to the server (14), the read piece of information being related to the set of products (48) associated with the identified product support (52), or representative of the identified product support (52) being in the installed position, and/or
- send a request to the server (14) for information about the set of products (48) associated with the identified product support (52), and/or for configuration information of the processing unit (72, 172), receive said information, and write it into the memory (90).

6. The display unit (12A, 112) according to any one of claims 1 to 5, further comprising:
- at least one sensor (94) adapted to perform a facial detection of a user of the display unit (12A, 112), and/or
- a sensor (65) for tracking said stock by visual recognition of the products in said stock.

7. The display unit (12A, 112) according to any one of claims 1 to 6, wherein the receptacle (50) comprises a fixed part (58) integral with the frame (34), a drawer (60) movably mounted on the fixed part (58), and a sensor (62) adapted to detect an opening or closing of the drawer (60) and to send information representative of the opening or closing to the processing unit (72, 172).

8. The display unit (12A, 112) of claim 7, wherein the memory (90) comprises information which, when executed by the processor (88), causes the processing unit (72, 172) to:
- read new information contained in the memory (90), and send the new information to the screen (76, 76A), the new information being related to the product set (48) associated with the identified product support (52), or
- send the server (14) information representative of the opening or closing.

9. The display unit (12A, 112) according to any one of claims 1 to 8, comprising:
- a geolocation system (42) adapted to geolocate the display unit (12A, 112) and provide the processing unit (72, 172) with geolocation information, or
- an interface (46) allowing a user of the display unit (12A, 112) to provide the processing unit (72, 172) with geolocation information.

10. The display unit (12A, 112) according to any one of claims 1 to 9 further comprising a button (40) connected to the processing unit (72, 172), the processing unit (72, 172) being configured to display on the screen (76, 76A) information representative of the display unit (12A, 112) when the button (40) is operated by a user of the display unit (12A, 112).

11. The display unit (12A, 112) according to any one of claims 1 to 10, comprising a plurality of modules (36, 38) for presenting a plurality of product sets (48), each of the modules (36, 38) comprising:
- optionally a reserve (56) containing a stock of said set of products (48),
- either a decentralised processing unit (72) comprising a processor (88) and a memory (90), or a video management chip (170) connected to the centralised processing unit (172) of the display unit (12A, 112),
- a screen (76, 76A) connected to the decentralised processing unit (72) or to the chip (170),
- a receptacle (50) mounted on the frame (34) and comprising a detection member (68), and
- a product support (52) comprising an identification member (84) representative of the product support (52), the product support (52) being movable between an uninstalled position, in which the product support is away from the display unit (12A, 112), and an installed position, in which the product support (52) is received in the receptacle (50),
the detection member (68) being adapted to cooperate with the identification member (84), when the product support (52) is in the installed position, in order to identify the product support (52), and to send to the decentralised processing unit (72) or the processing unit (172) of the display unit (12A, 112) information representative of the identified product support (52) being in the installed position, the memory (90) of the decentralised processing unit (72) or of the processing unit (172) of the display (12A, 112) comprising information which, when executed by the processor (88) of the decentralised processing unit (72) or of the processing unit (172) of the display unit (12A, 112), leads the decentralised processing unit (72) or the processing unit (172) of the display unit (12A, 112) to send video information contained in the memory (90) to the screen (76, 76A), the video information relating to the set of products (48) associated with the identified product support (52).

12. The display unit (12A, 112) according to claim 11, further comprising an intercommunication system (44) of the modules (36, 38) adapted so that the decentralised processing units (72) or the processing unit (172) of the display unit (12A, 112) receive positioning information:
- representative of the relative position to each other of receptacles (50) having product supports in the installed position, and/or
- for each of the receptacles (50) having product supports in the installed position, representative of the product supports that are in the installed position in those of the receptacles (50) located in a predefined vicinity of said each of the receptacles (50).

13. The display unit (12A, 112) according to claim 12, wherein the memory (90) of the processing unit (172) of the display unit (12A, 112) or of at least one of the decentralised processing units (72) comprises information which, when executed by the processor (88) of the processing unit (172) of the display unit (12A, 112) or of the at least one of the decentralised processing units (72), leads the processing unit (172) of the display unit (12A, 112) or the at least one of the decentralised processing units (72) to:
- send the server (14) the said positioning information, and/or
- send synchronised video information to some of the screens (76, 76A).

14. The display unit (12A, 112) according to claim 12 or 13, wherein the memory (90) of at least one of the decentralised processing units (72) associated with one of the receptacles (50) comprises information which, when executed by the processor (88) of the at least one of the decentralised processing units (72), causes the at least one of the decentralised processing units (72) to:
- send information to another of the decentralised processing units (72), or
- send the screen (76, 76A) associated with it information relating to one of the product sets (48) associated with one of the product supports (52) received in another of the receptacles (50).

15. A method of displaying one or more products (32), in particular cosmetics, at a point of sale (18A) in order to advertise the product(s) (32) at the point of sale (18A), using a display unit (12A, 112) according to any one of claims 1 to 14, and **characterized in that** it comprises the following steps:
- moving the product support (52) from the uninstalled position to the installed position,
- cooperation of the detection member (68) with the identification member (84) to identify the product support (52), and to send to the processing unit (72, 172) information representative of the identified product support (52) being in the installed position,
- reading, by the processor (88), of information from the memory (90), and
- sending, by the processing unit (72, 172), of information from the memory (90) to the server (14) via the network (16), and/or to the screen (76, 76A), the information relating at least to the set of products (48) associated with the identified product support (52).
